# EUROPÄISCHE PATENTSCHRIFT

(11) **EP 0 814 288 B1**
(45) Veröffentlichungstag und Bekanntmachung des Hinweises auf die Patenterteilung: **17.07.2002**
(21) Anmeldenummer: 97102610.9
(22) Anmeldetag: 19.02.1997
(51) Int. Cl.: F16J 15/32

(54) **Vorrichtung zur Abdichtung eines Ringspaltes zwischen einem Gehäuse und einer Welle**
Sealing device for an annular gap between a casing and a shaft
Dispositif d'étanchéité pour l'interstice annulaire entre un boîtier et un arbre

(30) Priorität: 20.06.1996 DE 19624611
(43) Veröffentlichungstag der Anmeldung: 29.12.1997
(73) Patentinhaber: Carl Freudenberg KG, 69469 Weinheim (DE)
(72) Erfinder: Drucktenhengst, Rolf, 68623 Lampertheim (DE); Heinrich, Uwe, 64853 Ottberg 4 (DE)

(56) Entgegenhaltungen:
- DE-A- 3 826 628
- DE-A- 4 018 796
- DE-U- 8 800 382
- US-A- 4 669 895
- US-A- 5 201 529
- US-A- 5 398 942

## Beschreibung

### Technisches Gebiet

Die Erfindung betrifft eine Vorrichtung zur Abdichtung des Ringspaltes zwischen einem Gehäuse und einer im Gehäuse gelagerten Welle gemäß Oberbegriff des Anspruchs 1.

### Stand der Technik

Eine derartige Vorrichtung ist aus der US 4,669,895 bekannt. Die Vorrichtung ist an einer zum Außenraum gerichteten Stirnseite des Dichtkörpers mit einer Nut versehen, die in Umfangsrichtung verläuft, so dass sich in der Nut ablagernde Schmutzbestandteile die Sogwirkung der ersten Dichtlippe beeinträchtigen können. Die Folge davon ist, dass der Austritt von Schmiermittel aus dem Gehäuseinneren nicht zuverlässig verhindert werden kann.

Kassettendichtungen werden benötigt, wenn Wellen, die am stinseitigen Ende mit einer Radialverzahnung versehen sind, durch einen bereits in ein Gehäuse eingesetzten Dichtring axial hindurch geführt werden müssen und die preisgünstigeren Radialwellendichtringe (ohne Innenring) nicht brauchbar sind, weil dabei die Gefahr besteht, daß deren Dichtlippe bei der Montage druch die Welle beschädigt wird. Insbesondere bei endseitig als Vielkeilwelle ausgebildeten Wellen sind die vergleichsweisen weichen Dichtkörper bei der Vorrichtung ohne Innenring gefährdet.

Bei der gattungsmäßigen Vorrichtung besteht diese Gefahr nicht. Sie weist gleichwohl aber noch eine Reihe von Nachteilen auf.
Da die zweite Dichtlippe nur aufgrund ihrer Eigenelastizität am Innenring anliegt, kann der Austritt von Teilen der Fettfüllung aus dem Raum zwischen erster und zweiter Dichtlippe nicht völlig ausgeschlossen werden. Diese Fettkeile werden durch den Innenring auf Wellendrehzahl beschleunigt und wandern dann über den radialen Flanschteil und den kürzeren Zylinderteil nach außen ab, ohne daß dies von der dritten Dichtlippe in nennenswertem Umfang verhindert werden könnte. Diese Fettkeile sind nicht nur unwiederbringlich verloren, sondern verschmutzen auch die Umgebung.

Wenn schließlich der Fettvorrat aufgebraucht ist, laufen die zweite und dritte Dichtlippe trocken, was über kurz oder lang zu deren Zerstörung führt, einerseits infolge Reibung und andererseits infolge einer Erwärmung auf für das Gummimaterial der Dichtlipppe unverträgliche Temperaturen.

Derselbe Effekt tritt auch auf, wenn aufgrund sich im Betrieb ausbildender Druckunterschiede der Fettvorrat eher über die erste Dichtlippe nach innen wandert. In diesem Fall läuft die dritte Dichtlippe von Anfang an trocken und die zweite, sobald nur ein geringer Teil der Fettfüllung abgewandert ist.

### Darstellung der Erfindung

Daraus ergibt sich die Aufgabe, die gattungsmäßige Vorrichtung so weiter zu bilden, daß die geschilderten Nachteile nicht auftreten können, ohne daß ihre Vorzüge bei der Wellenmontage verloren gehen. Außerdem sollen die gesuchten Maßnahmen so beschaffen sein, daß das Ziel ohne nennenswerte Mehrkosten erreicht wird, weil es sich dabei um in großen Stückzahlen gefertigte Bauteile handelt, die am Markt einem erheblichen Konkurrenzdruck unterliegen.

Zur Lösung dieser Aufgabe wird erfindungsgemäß vorgeschlagen, daß zwischen den Enden der zweiten und dritten Dichtlippe und den gegenüberliegenden Teilen des Innenrings jeweils ein Spalt vorgesehen ist, damit eine berührungsfreie Relativbewegung zwischen dem Innenring und diesen Dichtlippen möglich ist.

Dem liegt die Erwägung zugrunde, daß die als zusätzliche Staubdichtung der ersten Dichtlippe luftseitig vorgeschaltete zweite und dritte Dichtlippe in der bekannten Anordnung auf Dauer nicht betriebssicher sein können, weil früher oder später ein Trockenlaufen eintritt und die Dichtlippe dann durch Reibung und Überhitzung vorzeitig zerstört werden. Die nunmehr vorgesehenen, berührungslos wirkenden, luftseitig der ersten Dichtlippe vorgeschalteten Dichtlippen sind als Staubdichtung ausreichend effektiv, zumal zwischen dem flanschartigen Teil des Innenrings und der diesem gegenüberliegenden radialen Ringscheibe des Dichtkörpers ein weiterer, enger Dichtspalt vorgesehen ist und gegebenenfalls zwischen der dritten Dichtlippe und der sich radial erstreckenden Ringscheibe des Dichtkörpers sich ansammelnder Staub nur auf den Innenring gelangen kann und von diesem nach außen abgeschleudert wird. Auf diese Weise ist eine dreifach wirkende Labyrinthdichtung geschaffen, die keinen Verschleiß durch aneinanderreibende Teile aufweist und daher über wesentlich längere Betriebszeiten eine gleichbleibende Wirkung aufweist als die Vorrichtung, von der ausgegangen wurde. Dafür ist es offenbar auch von Bedeutung, daß die während der bestimmungsgemäßen Verwendung kontinuierlich von der Dichtlippe angesogene und in Richtung des abgedichteten Raumes geförderte Luftströmung dazu beiträgt, zu verhindern, daß die Fettfüllung vorzeitig verloren geht.

### Kurzbeschreibung der Zeichnung

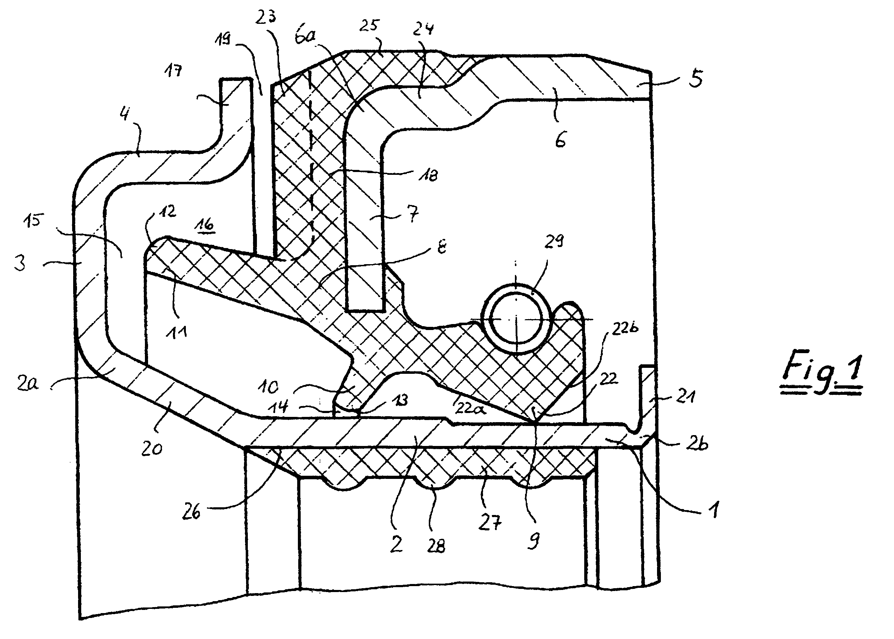

Vorteilhafte Ausgestaltungen des Erfindungsgedankens sind in den Ansprüchen 2 bis 16 beschrieben. Weitere Einzelheiten werden anhand des in Fig. 1 dargestellten Ausführungsbeispiels näher erläutert.

### Ausführung der Erfindung

Fig. 1 zeigt einen Längsschnitt durch eine Hälfte einer Vorrichtung gemäß der Erfindung in stark vergrößertem Maßstab. Die Vorrichtung aus einem Innenring besteht im wesentlichen aus einem Innenring 1, einem Außenring 5 und einem Dichtkörper 8. Der Innenring 1 weist einen längeren Zylinderteil 2, einen radial nach außen weisenden Flanschteil 3 und einen kurzen Zylinderteil 4 auf und stimmt insoweit mit dem Innenring der bekannten Vorrichtung überein. Der Außenring 5 umfaßt ein Zylinderteil 6 und einen radial nach innen weisenden Flanschteil 7 auf. Der Dichtkörper 8 ist einstückig aus elastomerem Material gebildet und hat eine erste Dichtlippe 9, die unter Vorspannung gegen den längeren Zylinderteil 2 des Innenrings 1 anliegt. Am Dichtkörper 8 sind zwei weitere Dichtlippen 10 und 11 ausgebildet, von denen die erste zum längeren Zylinderteil 2 und die zweite zum Flanschteil 3 hinweist. Zwischen den Enden 12, 13 der Dichtlippen 10, 11 und den ihnen gegenüberliegenden Teilen des Innenrings 1 sind Spalte 14 und 15 vorgesehen, so daß in diesem Bereich eine berührungsfreie Relativbewegung möglich ist. Die dritte Dichtlippe 11 ragt in den zwischen den längeren und kürzeren Zylinderteilen 2, 4 des Innenrings 1 gebildeten Raum 16. Das Ende des kurzen Zylinderteils 4 ist nach außen abgewinkelt, wodurch ein als Spritzring dienender, flanschartiger Teil 17 gebildet wird. Der Dichtkörper 8 weist eine sich radial erstreckende Ringscheibe 18 auf, die dem flanschartigen Teil 17 des Innenrings 1 durch einen Spalt 19 beabstandet gegenüberliegt. Um die Montage der Welle zu erleichtern, ist der längere Zylinderteil 2 des Innenrings 1 an seinem axial äußeren Ende (2 a) mit einem sich kegelartig erweiternden Abschnitt 20 versehen. An seinem axial inneren Ende (2 b) ist am längeren Zylinderteil 2 des Innenrings 1 ein nach außen weisender Kragen 21 vorgesehen, durch den sichergestellt wird, daß Innen- und Außenring vom Ende der Fertigungsstrecke bis zum Einbau in das Gehäuse unverlierbar miteinander verbunden bleiben. Anstelle eines umlaufenden Kragens 21 können auch mehrere, am Umfang verteilte, radial nach außen weisende Abwinkelungen vorgesehen werden.

Die erste Dichtlippe 9 ist im Querschnitt keilförmig ausgebildet und liegt mit der Keilspitze 22 am Innenring 1 an. Die axial äußere Keilfläche 22 a weist vom längeren Zylinderteil 2 des Innenrings 1 unter einem flacheren Winkel 6 auf als die axial innere Keilfläche 22 b. Auf diese Weise ist dafür gesorgt, daß bei rotierendem Innenring 1 zwischen Keilspitze 22 und Innenring 1 eine zum Gehäuseinneren gerichtete Sogwirkung entsteht, durch die zusätzlich der Austritt von Schmiermittel verhindert werden kann.

Die sich radial erstreckende Ringscheibe 18 des Dichtkörpers 8 ist auf ihrer dem Spalt 19 zugewandten Seite mit radial verlaufenden Einschnitten 23 versehen. Auch dadurch wird die Abdichtung gegen Staubeintritt verbessert.
Der Zylinderteil 6 des Außenrings 5 hat am axial äußeren Ende 6 a einen abgestuften Bereich 24 mit geringerem Durchmesser.

In diesem Bereich überdeckt der Dichtkörper 8 den Außenring 5, wobei ein Bereich 25 mit größerem Außendurchmesser als beim Zylinderteil 6 des Außenrings 5 gebildet ist. Dadurch kann der Außenring unter Kompression des aus elastomerem Material bestehenden Dichtkörpers 8 in die zugehörige Gehäusebohrung eingedrückt werden.

Die Innenfläche 26 des längeren Zylinderteils 2 des Innenrings 1 ist mit einer festanhaftenden Schicht 27 aus elastomerem Material versehen. Die Befestigung des Innenrings an der Welle erfolgt ebenfalls unter Kompression des elastomeren Materials. Um den Haftungseffekt bei leichter Montierbarkeit und guter statischer Abdichtwirkung zu verbessern, kann die Schicht 27 noch mit nach innen weisenden ringförmigen Vorsprüngen 28 versehen werden.

Der Dichtkörper 8 ist in an sich bekannter Weise durch Kleben oder Vulkanisieren mit dem Außenring 5 fest verbunden. Die Vorspannung der Dichtlippe 9 gegen den Innenring 1 wird in üblicher Weise durch einen Federring 29 oder ähnliche Mittel sichergestellt.

Mit der erfindungsgemäßen Vorrichtung wird ein Dichtsystem für den Dichtspalt zwischen einem Gehäuse und einer im Gehäuse gelagerten Welle bereit gestellt, bei dem eine am Dichtkörper angeformte zweite und dritte Dichtlippe 10, 11 eine berührungslos wirkende Staubdichtung bilden, die anders als bei der gattungsmäßigen Vorrichtung verschleißfrei ist. Zusammen mit dem Spalt 19 bilden die Spalte 14 und 15 ein dreifach wirksames Labyrinthsystem, dessen Einzeldichtungen durch Pufferzonen voneinander getrennt sind. Insgesamt ist das Labyrinthsystem mindestens so wirksam wie die zwei am Innenring anliegenden Dichtlippen des bekannten Systems, die durch Schmierung dauerhaft nicht vor Verschleiß zu schützen sind. Die erfindungsgemäße Vorrichtung kann auch ohne Fettvorrat verwendet werden und ist in der Herstellung nicht teurer als die bekannte Vorrichtung.

## Patentansprüche

1. Vorrichtung zur Abdichtung des Ringspaltes zwischen einem Gehäuse und einer im Gehäuse gelagerten Welle, bestehend im Wesentlichen aus
- einem Innenring (1), der einstückig mit einem zur Welle koaxial anzuordnenden längeren Zylinderteil (2), einem sich daran am axial äußeren Ende (2a) des längeren Zylinderteils (2) anschließenden, radial nach außen weisenden Flanschteil (3) und einem sich daran anschließenden, zum axial inneren Ende (2b) des längeren Zylinderteils (2) weisenden kürzeren Zylinderteil (4) mit größerem Durchmesser als beim längeren Zylinderteil (2) ausgebildet ist,
- einem Außenring (5), der einstückig aus einem in das Gehäuse einzusetzenden Zylinderteil (6) und einem sich am axial äußeren Ende (6a) daran anschließenden, radial nach innen weisenden Flanschteil (7) gebildet ist, und
- einem mit dem Außenring (5) verbundenen, elastomeren Dichtkörper (8) mit
- einer ersten Dichtlippe (9), die unter radialer Vorspannung, beabstandet von dessen axial innerem Ende (2b) am Innenring (1) anliegt,
- einer zweiten Dichtlippe (10), die zum längeren Zylinderteil (2) des Innenrings (1) hin ausgerichtet ist und
- einer dritten Dichtlippe (11), die zum Flanschteil (3) des Innenrings (1) hin ausgerichtet ist, wobei
- zwischen den Enden (12, 13) der zweiten und dritten Dichtlippe (10, 11) und den gegenüberliegenden Teilen des Innenrings (1) jeweils ein Spalt (14, 15) vorgesehen ist, damit zwischen dem Innenring (1) und diesen Dichtlippen (10, 11) eine berührungsfreie Relativbewegung möglich ist, wobei
- der kürzere Zylinderteil (4) des Innenrings (1) endseitig radial nach außen abgewinkelt ist, wodurch ein als Spritzring dienendes flanschartiges Teil (17) gebildet wird, wobei
- der Dichtkörper (8) eine sich radial erstreckende Ringscheibe (18) aufweist, die dem flanschartigen Teil (17) des Innenrings (1) durch einen Spalt (19) beabstandet gegenüberliegt,
***dadurch gekennzeichnet,***
- **dass** die sich radial erstreckende Ringscheibe (18) des Dichtkörpers (8) auf ihrer dem Spalt (19) zugewandten Seite radial verlaufende Einschnitte (23) aufweist.

2. Vorrichtung nach Anspruch 1, **dadurch gekennzeichnet, dass** die zweite Dichtlippe (10) die Form eines sich zum axial äußeren Ende (2a) des Innenrings (1) hin verjüngenden Trichters aufweist.

3. Vorrichtung nach Anspruch 1 oder 2, **dadurch gekennzeichnet, dass** die dritte Dichtlippe (11) die Form eines sich zum axial äußeren Ende (2a) des Innenrings (1) hin erweiternden Trichters aufweist.

4. Vorrichtung nach Anspruch 3, **dadurch gekennzeichnet, dass** die dritte Dichtlippe (11) die Form eines Hohlkegelstumpfes aufweist der sich zum axial äußeren Ende (2a) des Innenrings (1) hin trompetenartig erstreckt.

5. Vorrichtung nach einem der Ansprüche 1 bis 4, **dadurch gekennzeichnet, dass** sich die dritte Dichtlippe (11) in den zwischen den längeren und kürzeren Zylinderteilen (2, 4) des Innenrings (1) gebildeten Raum (16) hinein erstreckt.

6. Vorrichtung nach einem der Ansprüche 1 bis 5, **dadurch gekennzeichnet, dass** der längere Zylinderteil (2) des Innenrings (1) an seinem axial äußeren Ende (2a) einen sich kegelartig erweiternden Abschnitt (20) aufweist.

7. Vorrichtung nach einem der Ansprüche 1 bis 6, **dadurch gekennzeichnet, dass** der längere Zylinderteil (2) des Innenrings (1) an seinem axial inneren Ende (2 b) einen radial nach außen weisenden Kragen (21) oder mehrere am Umfang verteilte, radial nach außen weisende Abwinkelungen aufweist.

8. Vorrichtung nach einem der Ansprüche 1 bis 7, **dadurch gekennzeichnet, dass** die erste Dichtlippe (9) im Querschnitt keilförmig ausgebildet ist und mit der Keilspitze (22) am Innenring (1) anliegt.

9. Vorrichtung nach Anspruch 8, **dadurch gekennzeichnet, dass** die axial äußere Keilfläche (22a) unter einem flacheren Winkel vom längeren Zylinderteil (2) des Innenrings (1) wegweist als die axial innere Keilfläche (22b).

10. Vorrichtung nach einem der Ansprüche 1 bis 9, **dadurch gekennzeichnet, dass** der Zylinderteil (6) des Außenrings (5) am axial äußeren Ende (6a) einen abgestuften Bereich (24) mit geringerem Durchmesser aufweist.

11. Vorrichtung nach Anspruch 10, **dadurch gekennzeichnet, dass** der Dichtkörper (8) den abgestuften Bereich (24) überdeckt und in diesem Bereich (25) einen größeren Außendurchmesser aufweist als der Zylinderteil (6) des Außenrings (5).

12. Vorrichtung nach einem der Ansprüche 1 bis 11, **dadurch gekennzeichnet, dass** die Innenfläche (26) des längeren Zylinderteils (2) des Innenrings (1) eine festhaftende Schicht (27) aus elastomerem Material aufweist.

13. Vorrichtung nach Anspruch 12, **dadurch gekennzeichnet, dass** die Schicht (27) mit nach innen weisenden ringförmigen Vorsprüngen (28) versehen ist.

## Claims

1. A device for sealing off the annular gap between a housing and a shaft mounted in the housing, consisting essentially of
- an inner ring (1) which is produced in one piece with a longer cylindrical part (2) to be arranged coaxially to the shaft, with a radially outward-pointing flange part (3) adjoining said longer cylindrical part at the axially outer end (2a) of the latter, and with a shorter cylindrical part (4) adjoining said flange part and pointing towards the axially inner end (2b) of the longer cylindrical part (2) and having a larger diameter than said longer cylindrical part (2),
- an outer ring (5) which is formed in one piece from a cylindrical part (6) to be inserted into the housing and from a radially inward-pointing flange part (7) adjoining said cylindrical part at the axially outer end (6a), and
- an elastomeric sealing body (8) connected to the outer ring (5), with
- a first sealing lip (9) which bears under radial prestress on the inner ring (1) at a distance from the axially inner end (2b) of the latter,
- a second sealing lip (10) which is oriented towards the longer cylindrical part (2) of the inner ring (1), and
- a third sealing lip (11) which is oriented towards the flange part (3) of the inner ring (1),
- a gap (14, 15) being provided in each case between the ends (12, 13) of the second and third sealing lips (10, 11) and the opposite parts of the inner ring (1), so that a contact-free relative movement is possible between the inner ring (1) and these sealing lips (10, 11),
- the shorter cylindrical part (4) of the inner ring (1) being angled radially outwards on the end face, with the result that a flange-like part (17) serving as a splash ring is formed, and
- the sealing body (8) having a radially extending annular disc (18) which is located opposite the flange-like part (17) of the inner ring (1) at a distance formed by a gap (19),
**characterized**
- **in that** the radially extending annular disc (18) of the sealing body (8) has, on its side facing the gap (19), indentations (23) which run radially.

2. A device according to claim 1, **characterized in that** the second sealing lip (10) is in the form of a funnel narrowing towards the axially outer end (2a) of the inner ring (1).

3. A device according to either of claims 1 and 2, **characterized in that** the third sealing lip (11) is in the form of a funnel widening towards the axially outer end (2a) of the inner ring (1).

4. A device according to claim 3, **characterized in that** the third sealing lip (11) is in the form of a hollow cone frustum which extends in a trumpet-like manner towards the axially outer end (2a) of the inner ring (1).

5. A device according to any one of claims 1 to 4, **characterized in that** the third sealing lip (11) extends into the space (16) formed between the longer and shorter cylindrical parts (2, 4) of the inner ring (1).

6. A device according to any one of claims 1 to 5, **characterized in that** the longer cylindrical part (2) of the inner ring (1) has, at its axially outer end (2a), a portion (20) which widens in a cone-like manner.

7. A device according to any one of claims 1 to 6, **characterized in that** the longer cylindrical part (2) of the inner ring (1) has, at its axially inner end (2b), a radially outward-pointing collar (21) or a plurality of radially outward-pointing angled portions distributed on the circumference.

8. A device according to any one of claims 1 to 7, **characterized in that** the first sealing lip (9) is of wedge-shaped design in cross section and bears with the wedge tip (22) on the inner ring (1).

9. A device according to claim 8, **characterized in that** the axially outer wedge face (22a) points away from the longer cylindrical part (2) of the inner ring (1) at a flatter angle than the axially inner wedge face (22b).

10. A device according to any one of claims 1 to 9, **characterized in that** the cylindrical part (6) of the outer ring (5) has, at the axially outer end (6a), a stepped region (24) with a smaller diameter.

11. A device according to claim 10, **characterized in that** the sealing body (8) covers the stepped region (24) and in this region (25) has a larger outside diameter than the cylindrical part (6) of the outer ring (5).

12. A device according to any one of claims 1 to 11, **characterized in that** the inner face (26) of the longer cylindrical part (2) of the inner ring (1) has a firmly adhering layer (27) of elastomeric material.

13. A device according to claim 12, **characterized in that** the layer (27) is provided with inward-pointing annular projections (28).

## Revendications

1. Dispositif d'étanchéité pour l'interstice annulaire entre un boîtier et un arbre logé dans le boîtier, comprenant, pour l'essentiel,
- un anneau intérieur (1) réalisé tout d'une pièce avec une pièce cylindrique (2) de longueur supérieure à situer coaxialement par rapport à l'arbre, avec une pièce (3) formant une bride qui prolonge l'extrémité (2a) extérieure, en direction axiale, de ladite pièce cylindrique (2) de longueur supérieure et qui est tournée vers l'extérieur, dans le sens radial, et avec une pièce cylindrique (4) de longueur moindre qui prolonge la pièce précédente et qui est tournée vers l'extrémité (2b) intérieure, en direction axiale, de la pièce cylindrique (2) de longueur supérieure et dont le diamètre est supérieur à celui de la pièce cylindrique (2) de longueur supérieure,
- un anneau extérieur (5) formé tout d'une pièce avec une pièce cylindrique (6) à insérer dans le boîtier et avec une pièce formant une bride (7) qui en prolonge l'extrémité (6a) extérieure, en direction axiale, et qui est tournée vers l'intérieur, en direction radiale, ainsi que
- un corps d'étanchéité (8) élastomère fixé à l'anneau extérieur (5), ce corps comprenant
- une première lèvre d'étanchéité (9) attenant, sous précontrainte radiale, à l'anneau intérieur (1) à distance de son extrémité (2b) intérieure, en direction axiale,
- une seconde lèvre d'étanchéité (10) pointée sur la partie cylindrique (2) de longueur supérieure de l'anneau intérieur (1) et
- une troisième lèvre d'étanchéité (11) pointée sur la partie (3) formant une bride de l'anneau intérieur (1),
- respectivement un interstice (14, 15) étant prévu entre les extrémités (12, 13) de la deuxième et de la troisième lèvre d'étanchéité (10, 11), d'une part, et les parties de l'anneau intérieur (1) qui se trouvent vis-à-vis de chacune d'elles, d'autre part, afin de permettre un mouvement relatif sans contact entre l'anneau intérieur (1) et lesdites lèvres d'étanchéité (10, 11),
- l'extrémité de la partie cylindrique (4) de longueur moindre de l'anneau intérieur (1) étant pliée vers l'extérieur aux extrémités, en direction radiale, de manière à former une pièce (17) ayant la forme d'une espèce de bride et servant de bague de projection,
- le corps d'étanchéité (8) présentant un disque annulaire (18) qui: s'étend en direction radiale et se trouve vis-à-vis de la partie (17) de l'anneau intérieur (1) ayant la forme d'une espèce de bride dont il est distant d'un interstice (19),
**caractérisé en ce que**
- le disque annulaire (18) du corps d'étanchéité (8), qui s'étend en direction radiale, présente des incisions radiales (23) sur sa face tournée vers l'interstice (19).

2. Dispositif selon la revendication 1, **caractérisé en ce que** la deuxième lèvre d'étanchéité (10) se présente sous la forme d'un entonnoir qui va se rétrécissant en direction de l'extrémité (2a) extérieure, en direction axiale, de l'anneau intérieur (1).

3. Dispositif selon la revendication 1 ou 2, **caractérisé en ce que** la troisième lèvre d'étanchéité (11) se présente sous la forme d'un entonnoir qui va s'élargissant en direction de l'extrémité (2a) extérieure, en direction axiale, de l'anneau intérieur (1).

4. Dispositif selon la revendication 3, **caractérisé en ce que** la troisième lèvre d'étanchéité (11) se présente sous la forme d'un cône creux tronqué qui s'étend, sous une forme évoquant une trompette, en direction de l'extrémité (2a) extérieure, en direction axiale, de l'anneau intérieur (1).

5. Dispositif selon l'une des revendications 1 à 4, **caractérisé en ce que** la troisième lèvre d'étanchéité (11) s'étend dans l'espace (16) formé entre la partie cylindrique (2) de longueur supérieure et la partie cylindrique (4) de longueur moindre de l'anneau intérieur (1).

6. Dispositif selon l'une des revendications 1 à 5, **caractérisé en ce que** l'extrémité (2a) extérieure, en direction axiale, de la partie cylindrique (2) de longueur supérieure de l'anneau intérieur (1) présente une partie (20) qui va s'élargissant sous la forme d'une espèce de cône.

7. Dispositif selon l'une des revendications 1 à 6, **caractérisé en ce que** l'extrémité (2b) intérieure, en direction axiale, de la partie cylindrique (2) de longueur supérieure de l'anneau intérieur (1) présente un collet (21) tourné vers l'extérieur, en direction radiale, ou plusieurs parties pliées tournées vers l'extérieur, en direction radiale, et réparties sur la circonférence.

8. Dispositif selon l'une des revendications 1 à 7, **caractérisé en ce que** la section transversale de la première lèvre d'étanchéité (9) est réalisée en forme de coin dont la pointe (22) est attenante à l'anneau intérieur (1).

9. Dispositif selon la revendication 8, **caractérisé en ce que** la surface extérieure (22a) du coin, en direction axiale, s'éloigne de la partie cylindrique (2) de longueur supérieure en formant un angle plus plat que celui de la surface intérieure (22b) du coin, en direction axiale.

10. Dispositif selon l'une des revendications 1 à 9, **caractérisé en ce que** l'extrémité (6a) extérieure, en direction axiale, de la partie cylindrique (6) de l'anneau extérieur (5) présente une partie (24) dénivelée de diamètre moindre.

11. Dispositif selon la revendication 10, **caractérisé en ce que** le corps d'étanchéité (8) recouvre la partie dénivelée (24) et présente, dans cette zone (25), un diamètre extérieur supérieur à celui de la partie cylindrique (6) de l'anneau extérieur (5).

12. Dispositif selon l'une des revendications 1 à 11, **caractérisé en ce que** la surface intérieure (26) de la partie cylindrique (2) de longueur supérieure de l'anneau intérieur (1) présente une couche adhérente (27) en matière élastomère.

13. Dispositif selon la revendication 12, **caractérisé en ce que** la couche (27) est pourvue de saillies (28) annulaires tournées vers l'intérieur.
